# EUROPEAN PATENT APPLICATION

(11) **EP 2 469 155 A1**
(43) Date of publication of application: **27.06.2012**
(21) Application number: 11774947.3
(22) Date of filing: 25.04.2011
(51) Int. Cl.: F21S 2/00, F21V 19/00, F21V 23/00, F21Y 101/02

(54) **FLUORESCENT LAMP TYPE LIGHT EMITTING ELEMENT LAMP, AND ILLUMINATING APPARATUS**

(30) Priority: 27.04.2010 JP 2010102441; 27.04.2010 JP 2010102440
(71) Applicant: Toshiba Lighting & Technology Corporation, Yokosuka-shi Kanagawa 237-8510 (JP)
(72) Inventor: SUGISHITA, Naoki, Yokosuka-shi Kanagawa (JP); HIEDA, Masanao, Yokosuka-shi Kanagawa (JP)
(74) Representative: Sander Jakobsson, Sofia Ellinor
(86) International application number: PCT/JP2011/060042
(87) International publication number: WO 2011/136166

(57) **Abstract**

In one embodiment, a fluorescent lamp type light-emitting device lamp includes a substantially cylindrical main body having one end portion and the other end portion; a light-emitting device disposed in the main body; and a pair of ferrules provided in the one end portion and the other end portion and connected to a socket, respectively. The main body of the fluorescent lamp type light-emitting device lamp is connected to earth via one of the pair of ferrules.

## Description

### TECHNICAL FIELD

The present embodiment relates to a fluorescent lamp type light-emitting device lamp and a lighting apparatus to which the fluorescent lamp type light-emitting device lamp is applied.

### Background Art

In recent years, a lighting apparatus has been developed which uses an LED as a light source and is used in indoor or outdoor along with high output, high efficiency and spread of the LED. Energy saving and long life can be expected of an LED when compared to a light source such as a fluorescent lamp of the related art, and can reduce the exchange frequency of the light source or the lighting apparatus, and is advantageous for maintenance. Thus, it is desired to use the LED as the light source on behalf of the fluorescent lamp for this reason.

In the lighting apparatus using the LED, when the insulation properties of a substrate or the like, on which the LED and a circuit board are mounted, decline, there is a risk of electric shock at the time of the maintenance of the fluorescent lamp type LED lamp or the like. Thus, in order to secure the safety, it is desired to connect the fluorescent lamp type LED lamp with a main body side of the lighting apparatus by an earth line. Particularly, in JIS C 8105-1, there is a demand for a response such as grounding in a case of using a power source in which a rated voltage exceeds 150 V

### BRIEF DESCRIPTION OF DRAWINGS

Fig. 1 is a perspective view that shows a lighting apparatus according to a first embodiment.
Fig. 2 is a side view that shows the lighting apparatus.
Fig. 3 is a perspective view that shows a part of a fluorescent lamp type light-emitting device lamp.
Fig. 4 is a longitudinal cross-sectional view that shows the fluorescent lamp type light-emitting device lamp.
Fig. 5 is a cross-sectional view taken along a line Y-Y in Fig. 4.
Fig. 6 is a connection diagram that shows the lighting apparatus.
Fig. 7 is a connection diagram of a modified example that shows the lighting apparatus.
Fig. 8 is a partially perspective view that shows the lighting apparatus according to a second embodiment in an exploded manner.
Fig. 9 is a perspective view that shows an attachment state of a socket.
Fig. 10 is a perspective view that shows the socket.
Fig. 11 is a longitudinal cross-sectional view that shows a fluorescent lamp type light-emitting device lamp according to a third embodiment.
Fig. 12 is a cross-sectional view taken along a line Y-Y in Fig. 11.
Fig. 14A and Fig. 14B are a side view and a cross-sectional view that show a light source portion according to a fourth embodiment, respectively.

### BEST MODES FOR CARRYING OUT THE INVENTION

According to one embodiment, a fluorescent lamp type light-emitting device lamp includes: a substantially cylindrical main body having one end portion and the other end portion; a light-emitting device disposed in the main body; and a pair of ferrules provided in the one end portion and the other end portion and connected to a socket, respectively, wherein one ferrule of the pair of ferrules is connected to earth via the ferrule, by being attached to the socket connected to earth.

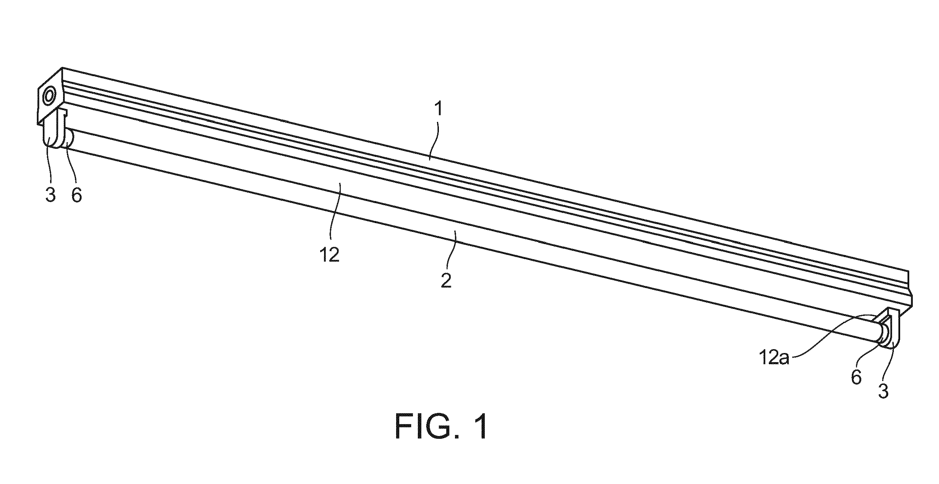

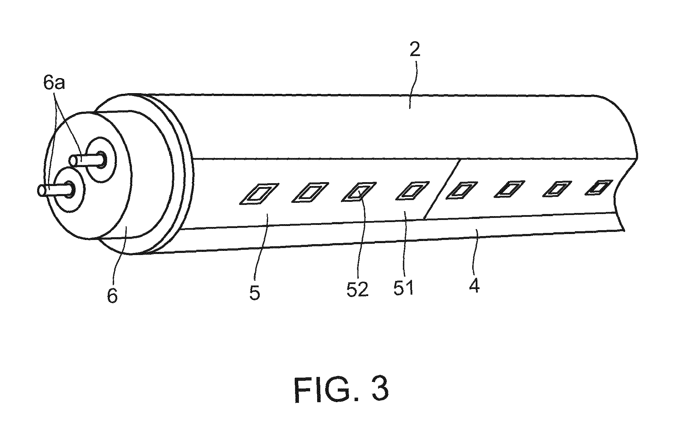

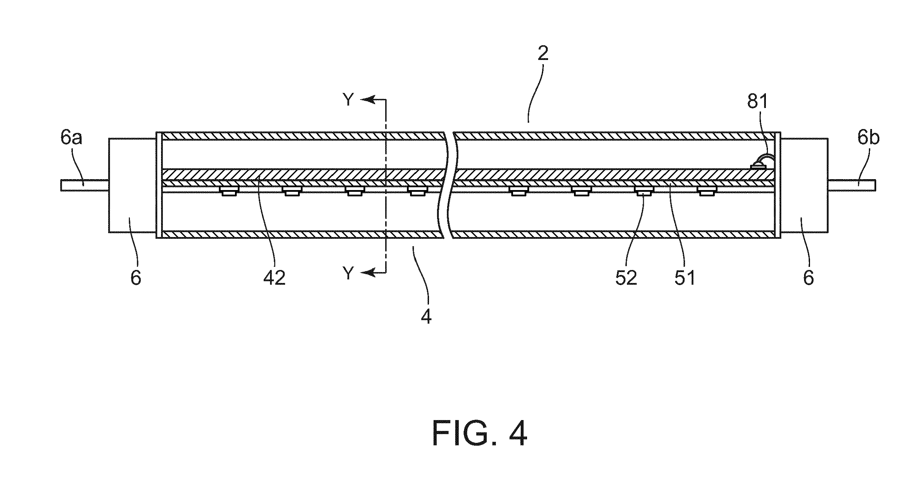

Hereinafter, a lighting apparatus according to a first embodiment of the present invention will be described with reference to Figs. 1 to 7. Figs. 1, 2, 6 and 7 show the lighting apparatus, and Figs. 3 to 5 show the fluorescent lamp type light-emitting device lamp. In addition, in each drawing, the same portions are denoted by the same reference numerals and the repeated description will be omitted.

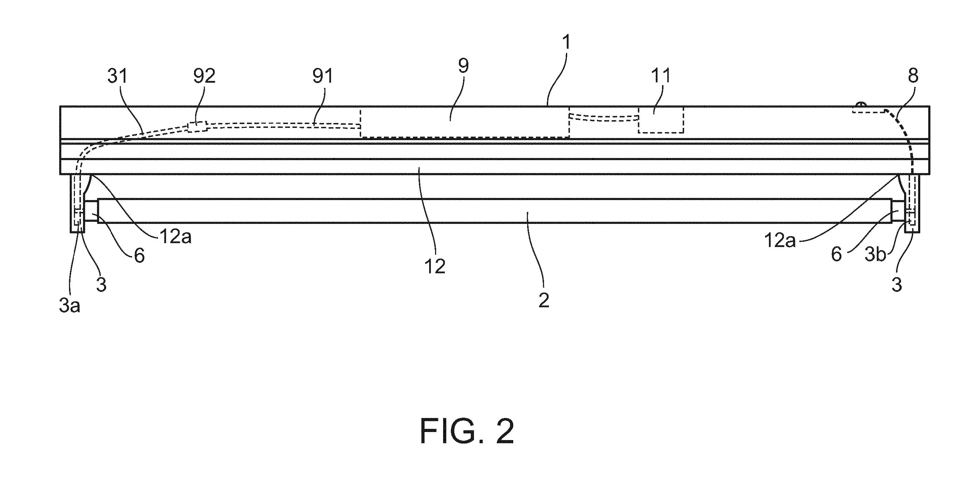

In Figs. 1 and 2, the lighting apparatus to be installed to a ceiling surface is shown. The lighting apparatus includes a lighting apparatus main body 1 of a substantially oblong rectangular parallelepiped shape formed by a cold-rolled steel sheet or the like, and a fluorescent lamp type light-emitting device lamp 2 attached to the lighting apparatus main body 1. The lighting apparatus main body 1 is basically formed in an existing form and is configured so that the fluorescent lamp type light-emitting device lamp 2 is mounted on a socket 3 attached to both end portions in a longitudinal direction.

As shown in Figs. 3 to 5, the fluorescent lamp type light-emitting device lamp 2 has the same size and external form as those of an existing straight tube type fluorescent lamp. Specifically, the fluorescent lamp type light-emitting device lamp 2 has the same size and external form as those of the straight tube type fluorescent lamp of 40 W. The fluorescent lamp type light-emitting device lamp 2 has an elongated form, and includes a substantially cylindrical main body 4, a light source portion 5, and a ferrule 6.

The main body 4 has an inner space, is formed in a substantially cylindrical shape, and is made by extrusion molding from a light-transmitting synthetic resin material. In a substantially middle portion in the inner portion of the main body 4, a long rectangular thermal radiation member 42 is disposed along the longitudinal direction. The thermal radiation member 42 is formed of an aluminum material or the like having satisfactory thermal conductivity. In addition, a molding method of the main body 4 is not particularly limited. Furthermore, for example, the main body 4 may be formed by coupling two semi-circular members to each other. Moreover, if the inner space can be formed, a cross-section may be a quadrangle.

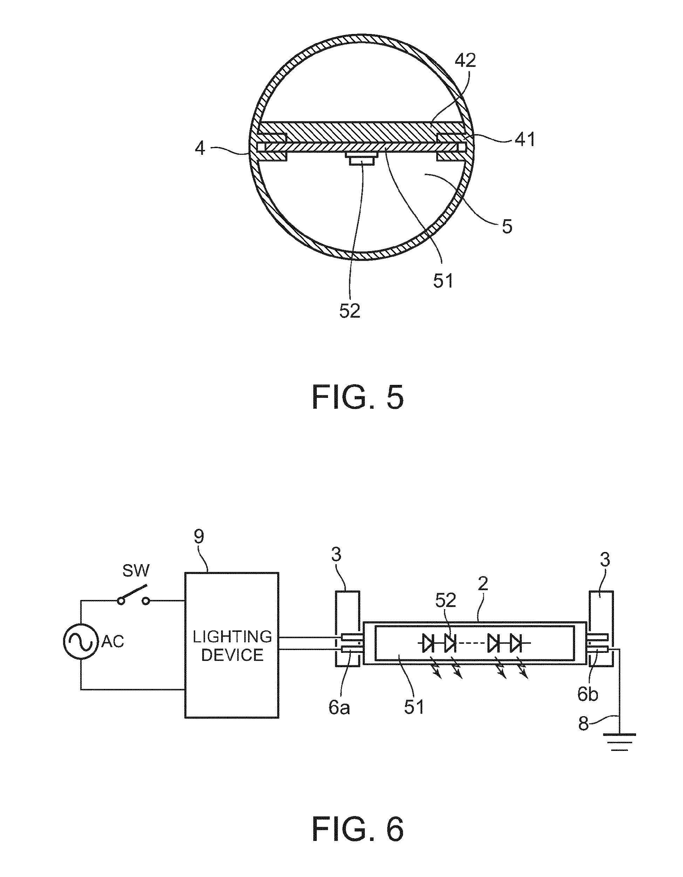

In a substantially middle of the inner surface side of the main body 4, a pair of support protrusions 41 is oppositely formed (see Fig. 5). The support protrusions 41 are formed in a rail shape along the longitudinal direction of the main body 4. In addition, the support protrusion 41 can be partially formed depending on the molding method. The light source portion 5 includes a substrate 51, and a light-emitting device 52 mounted on the substrate 51. The substrate 51 is formed in a substantially rectangular shape. Specifically, four substrates 51 are attached to the thermal radiation member 42 so as to adhere to the back side thereof in an aligned manner in the longitudinal direction.

The substrate 51 is formed of a flat plate of a glass epoxy resin that is an insulation material, and a wiring pattern formed of a copper foil is provided on a front side thereof. Furthermore, a suitable resist layer may be provided. In addition, when using the insulation material, the material of the substrate 51 can use a ceramic or a synthetic resin material. Furthermore, when being made of metal, it is desirable to use a material such as aluminum which has satisfactory thermal conductivity and excellent thermal radiation characteristics.

The light-emitting device 52 is constituted by a solid light-emitting device such as an LED and an organic EL. In the present embodiment, the light-emitting device 52 is constituted by the LED, and a surface mounting type LED package is used. Specifically, the light-emitting device 52 includes an LED chip disposed on the main body formed of ceramic, and a light-transmitting resin for molding such as the epoxy-based resin and the silicone resin sealing the LED chip. In addition, in the present embodiment, the four light-emitting devices are disposed linearly on one substrate 51 along the longitudinal direction, but the number of the light-emitting devices is not particularly limited.

In addition, as mentioned above, the LED chip may be directly mounted on the substrate 51, and a bullet-shaped LED may be mounted. The mounting method and form are not particularly limited. For example, when mounting the light-emitting device on the substrate, there are cases of mounting the light-emitting device as the LED package by the surface mounting method, and directly mounting the light-emitting device on the substrate.

The LED chip is a blue LED chip that emits a blue light. A fluorescent substance is mixed with the light-transmitting resin, and in order to emit the white light, a yellow fluorescent substance which radiates a yellow-based light that is in a complementary color relationship with the blue light is used.

The ferrule 6 is, for example, a G13 type ferrule, and is configured so as to be attachable to the socket 3 of the lighting apparatus to which the existing straight tube type fluorescent lamp is attached. The ferrules 6 are provided on both end portions of the main body 4, and a pair of terminal pins 6a and 6b are projected and attached to the ferrule 6 portion. Herein, the ferrule 6 is made of a metal, but the pair of terminal pins 6a and 6b is configured in the electrical insulation state.

As is evident also with reference to Fig. 6, a pair of terminal pins 6a of one end side (a left side in the drawing) is connected to a wiring pattern of the substrate 51, and the electric power is supplied to the light-emitting deice 52 via the socket 3. Meanwhile, one terminal pin 6b of the pair of terminal pins 6b of the other end side (a right side in the drawing) is adapted to be connected to earth, and, for example, the one terminal pin 6b is connected to the thermal radiation member 42 made of a metal by a connection line 81. Specifically, one end of the connection line 81 is connected to the terminal pin 6b, and the other end thereof is fixed and connected to the back side of the thermal radiation member 42 by fixing means such as a screw. As a result, the electrically conductive thermal radiation member is connected to earth via the ferrule 6.

In addition, one of the pair of terminal pins 6b may be connected to earth. Furthermore, for example, both of the pair of terminal pins 6b may be connected to earth. As a result, when connecting the ferrule 6 to the socket 3, the earth connection is reliably performed without considering the directivity.

Next, as shown in Figs. 1 and 2, the lighting apparatus main body 1 is formed in a box shape having an opening portion with an opened lower surface side, and includes the socket 3 attached to both end portions, a lighting device 9 and a terminal board 11 accommodated in the lighting apparatus main body 1, and a reflection plate 12 attached so as to cover the opening portion of the lower surface side.

The socket 3 is an existing socket, and includes electric supply terminals 3a and 3b or the like to which the terminal pins 6a and 6b of the fluorescent lamp type light-emitting device lamp 2 are connected. In order to supply the electric power to the light source portion 5 of the fluorescent lamp type light-emitting device lamp 2, a power source lead line 31 is connected to the electric supply terminal 3a of the socket 3 of one end side (the left side in the drawing). Furthermore, in one of the electric supply terminal 3b of the socket 3 of the other end side (the right side in the drawing), an earth line 8 is connected to the lighting apparatus main body 1 by the screwing or the like. Since the lighting apparatus main body 1 is electrically connected to an earth terminal of the terminal board 11, the earthing is performed thereby. Thus, a state is obtained where none is connected to the one electric supply terminal 3b of the socket 3.

The lighting device 9 is connected to a commercial alternating current power source AC, and receives the alternating current power source AC to generate the direct current output. The lighting device 9, for example, connects a smoothing capacitor between output terminals of a full-wave rectifier circuit, and connects a direct current voltage converting circuit to the smoothing capacitor. A lead line 91 is derived from the lighting device 9, and the lead line 91 is connected from the power source lead line 31 to the electric power terminal 3a of the socket 3 via a connector 92. Furthermore, the lighting device 9 is connected to the terminal board 11 by the lead line.

The reflection plate 12 has a reflection surface and is attached to cover the opening portion of the lower surface side of the lighting apparatus main body 1. Furthermore, both end portions thereof in the longitudinal direction are formed with substantially rectangular notch cut out 12a to which the socket 3 is fitted.

A method of installing the fluorescent lamp type light-emitting device lamp 2 in the lighting apparatus main body 1 in regard to the lighting apparatus configured as above will be described. The present embodiment premises a case of renewal which replaces the straight tube type fluorescent lamp attached to the existing lighting apparatus with the fluorescent lamp type light-emitting device lamp 2.

Firstly, in the existing lighting apparatus, a straight tube type fluorescent lamp (not shown) is detached and the reflection plate 12 is detached. Next, a lighting device (not shown) of the straight tube type fluorescent lamp is detached, then, the lighting device 9 of the fluorescent lamp type light-emitting device lamp 2 is newly placed on the lighting apparatus main body 1, and the lead line is connected to the terminal board 11. Moreover, the lead line 91 connected to the lighting device 9 is connected to a power source lead line 31 derived from the socket 3 side via a connector 92. Furthermore, the earth line is connected to the electric supply terminal 3b of the socket 3, and the reflection plate 12 is attached to the lighting apparatus main body 1 side.

Next, the ferrule 6 of the fluorescent lamp type light-emitting device lamp 2 is mounted to the socket 3. As a result, the fluorescent lamp type light-emitting device lamp 2 is attached to the lighting apparatus main body 1. Thus, the light-emitting portion 5 is supplied with the electric power from the lighting device 9. The earth connection is performed from the ferrule 6 via the socket 3, and the fluorescent lamp type light-emitting device lamp 2 enters the grounding state. In addition, the socket 3 may be replaced depending on the degradation state of the socket 3.

As shown in the connection diagram of Fig. 6, the lighting device 9 is connected to the commercial alternating power source AC, and the output from the lighting device 9 is supplied to the light-emitting device 52. In this case, the output from the lighting device 9 is supplied from the socket 3 to the substrate 51 and the light-emitting device 52 via the pair of terminal pins 6a of the ferrule 6. Meanwhile, one terminal pin 6b of the terminal pins 6b of the ferrule 6 of the other side is connected to earth via the socket 3.

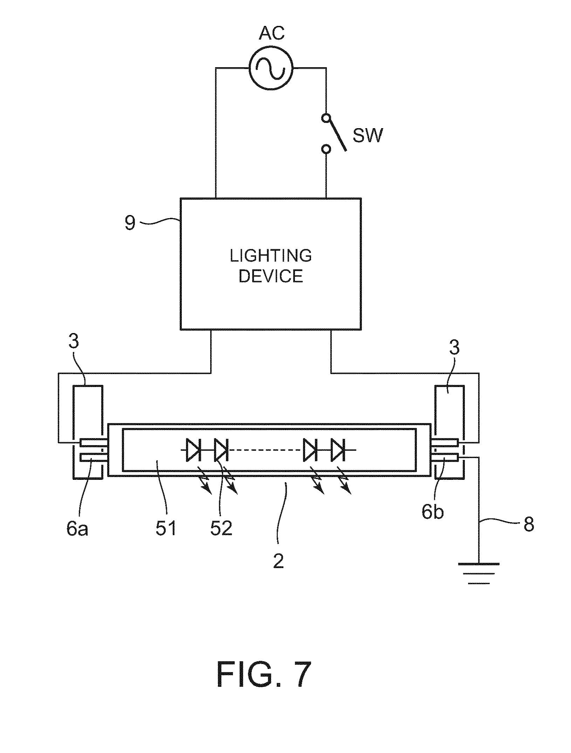

In addition, as shown in the connection diagram of Fig. 7, the output from the lighting device 9 may be connected and supplied to one terminal pin of the pair of terminal pins 6a and 6b of the opposing socket 3, respectively. Moreover, the other terminal pin, for example, one of the pair of the terminal pins 6b may be connected to earth. The same function as that of the wire connection shown in Fig. 6 can also be obtained by this wire connection. In addition, the terminal pins 6a and 6b supplied with the output from the lighting device 9 may be separately placed in a direction perpendicular to the longitudinal direction of the lamp main body 4 on the same plane, and may be projected so as to be parallel to the longitudinal direction of the lamp main body 4. That is, the terminal pins for electric supply are placed in a position of double rotational symmetry centered on the middle of the lamp main body 4. With the placement, when attaching the lamp, the attachment operation is easy without considering the position of the terminal pin.

In the lighting apparatus configured as mentioned above, when the electric power is supplied to the lighting device 9, electricity is conducted from the lead line 91, the power source lead line 31, the socket 3, and the ferrule 6 to the light-emitting device 52 via the substrate 51, and the respective light-emitting devices 52 are lighted. Light emitted from the light-emitting device 52 is radiated downward through the light-transmitting main body 4, and a predetermined range is irradiated.

Furthermore, since one ferrule 6 is connected to earth and is grounded, even if the insulation property of the substrate 51 or the like with the light-emitting device 52 mounted thereon is degraded, the insulation property between the substrate 51 and the thermal radiation member 42 is lowered and the electric current leaks to the thermal radiation member 42, the thermal radiation member 42 is grounded. Thus it is possible to prevent the risk of the electric shock or the like at the time of the maintenance such as the cleaning and the exchange of the fluorescent lamp type light-emitting device lamp 2.

According to the present embodiment as mentioned above, it is possible to apply the fluorescent lamp type light-emitting device lamp 2 that is structurally compatible with the existing fluorescence lamp. Further, the earth connection is performed by the use of the ferrule 6, it is possible to provide the lighting apparatus capable of securing the safety by the simple configuration.

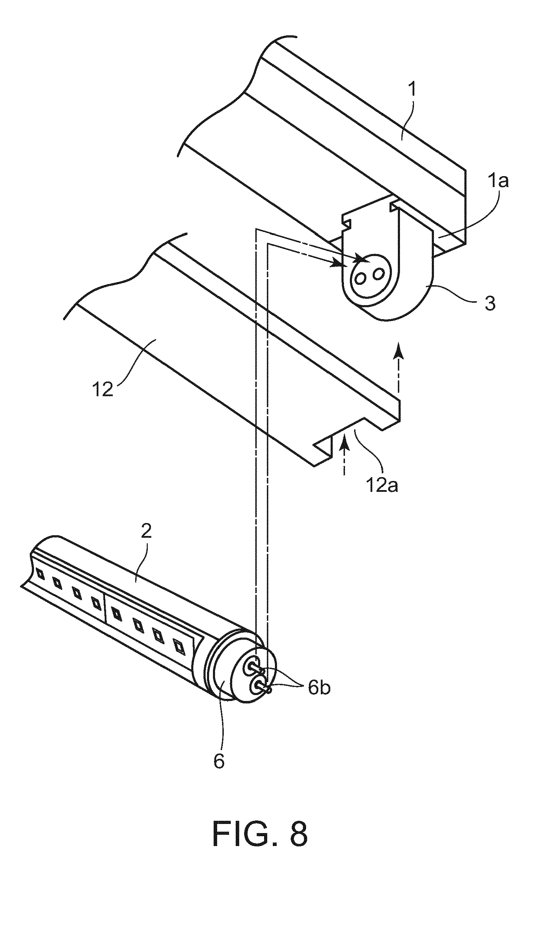

Next, a lighting apparatus according to a second embodiment of the present invention will be described with reference to Figs. 8 to 10. In addition, the same or the corresponding portions as those of the first embodiment are denoted by the same reference numerals and the repeated descriptions thereof will be omitted. Figs. 8 to 10 show an example which attaches the socket 3 to the lighting apparatus main body 1 and performs the earth connection.

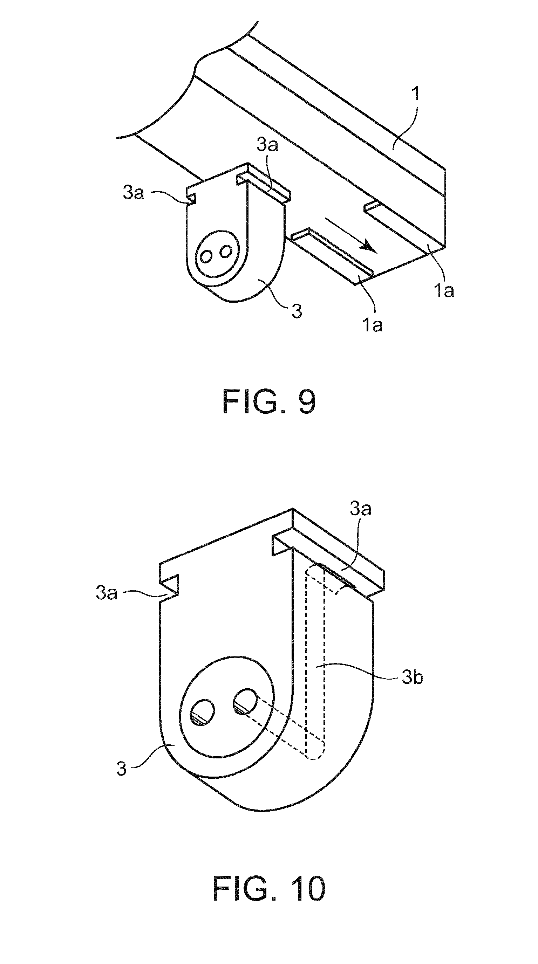

As shown in Fig. 8, the socket 3 is attached to the end portion of the opening portion of the lighting apparatus main body 1. The socket 3 as shown in Fig. 9 is formed with slide grooves 3a on both sides thereof. Meanwhile, on the lighting apparatus main body 1 side, a socket attachment portion 1a projected inward from the edge of the opening portion is provided so as to face the both sides. For this reason, the socket 3 is adapted to attach the slide groove 3a to a socket attachment portion 1a by sliding.

Herein, as shown in Fig. 10, the electric supply terminal 3b of the socket 3 is derived so as to be projected to the slide groove 3a. Thus, the socket 3 is slid and attached to the socket attachment portion 1a, and at the same time, a portion projected to the slide groove 3a of the electric supply terminal 3b is configured so as to come into contact with the socket attachment portion 1a. The lighting apparatus main body 1 is made of a metal such as a cold-rolled steel sheet. Since the socket 3 is attached to the socket attachment portion 1a and at the same time the earth connection is performed, the electric path of the earth is formed.

According to the present embodiment, the socket 3 is attached to the lighting apparatus main body 1 and the earth connection is performed, and thus, an effect is exhibited in which the operation of earthing is easy.

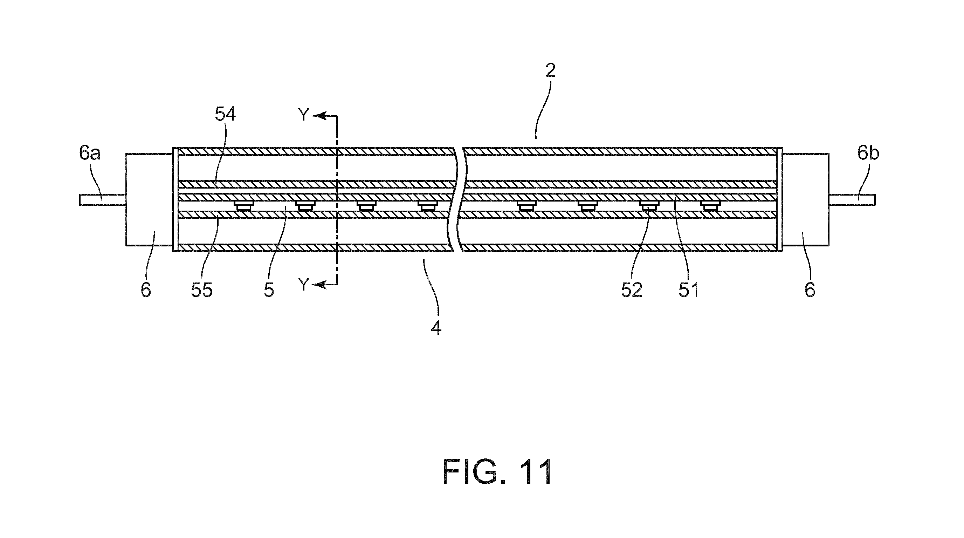

Next, a lighting apparatus according to a third embodiment of the present invention will be described with reference to Figs. 11 to 14. In addition, the same or corresponding portions as those of the first embodiment are denoted by the same reference numerals and the repeated descriptions thereof will be omitted. Figs. 11 to 14 show another example of the light source portion 5.

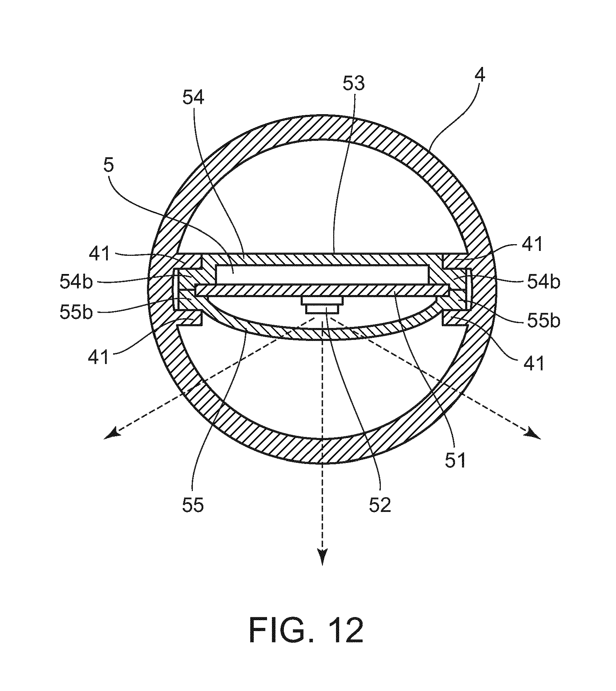

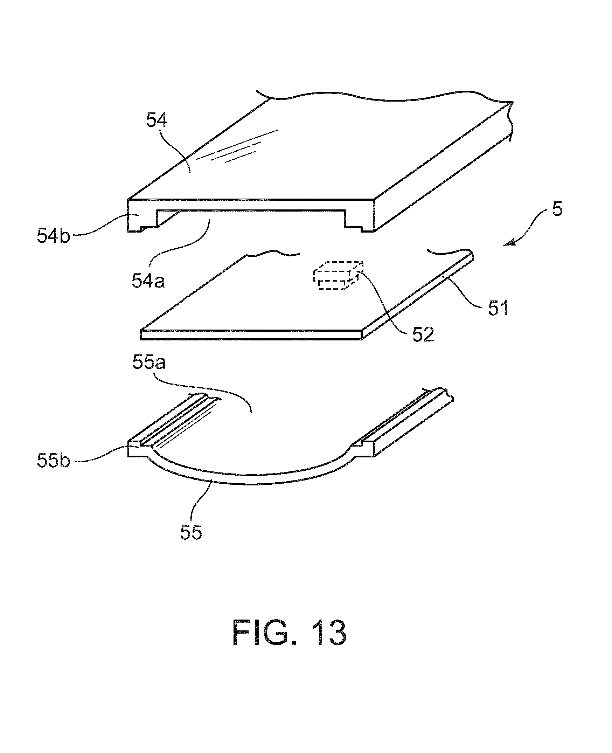

The light source portion 5 includes a substrate 51, a light-emitting device 52 mounted on the substrate 51, and an insulation member 53 that covers the peripheries of the substrate 51 and the light-emitting device 52. As representatively shown in Figs. 12 and 13, the insulation member 53 is formed of a resin material having the insulation property, and includes a base member 54 and a cover member 55.

The base member 54 is formed in a gutter shape having an opening portion 54a on one surface side thereof, and is formed of a PBT and an ASA resin. Furthermore, an edge portion of the opening portion 54a is formed with a step-like coupling step portion 54b along the longitudinal direction.

Similarly, the cover member 55 is formed in a gutter shape forming a curved surface shape (a lower convex portion in the drawing) having an opening portion 55a on one surface side thereof, and a coupling step portion 55b is formed so as to correspond to the coupling step portion 54b of the base member 54. The cover member 55 causes light emitted from the light-emitting device 52 to penetrate therethrough, and thus is formed by the transparent acryl resin.

In addition, if one has light-transmitting properties, the cover member 55 can be formed of another material, for example, polycarbonate or the like, without being limited to the acryl resin. In addition, as the material of the base member 54, a material having light-transmitting properties may be used. The cover member 55 can also have a light distribution control function, that is, a lens and diffusion function.

The edge portion of the substrate 51 is interposed and pinched between the opening portion 54a of the base portion 54 and the opening portion 55a of the cover member 55, that is, between the both coupling step portions 54b and 55b. Moreover, the portions of the coupling step portions 54b and 55b are supported so as to be pinched in the support protrusion 41 of the main body 4, and the light source portion 5 is disposed in the main body 4 (see Fig. 12). In this manner, the substrate 51 with the light-emitting device 52 mounted thereon is insulated in the state where the periphery thereof is surrounded by the insulation member 53, and is disposed in the main body 4.

Furthermore, the light source portion 5 is configured so that the periphery of the substrate 51 with the light-emitting device 52 mounted thereon is surrounded by the insulation member 53. Moreover, the light source portion 5 is adapted to be disposed in the inner space of the main body 4 having the insulation property. Thus, the insulation member 53 has a first insulation function, and the main body 4 has a second insulation function, whereby the substrate 51, which is the electrically conductive portion, is doubly insulated, and the insulation property is strengthened. In addition, the insulation may be multiply performed. As a result, the insulating properties can be further strengthened.

For this reason, if the insulation properties of the substrate 51 or the like with the light-emitting device 52 mounted thereon is degraded, the insulation properties as the fluorescent lamp type light-emitting device lamp 2 can be secured. Furthermore, the lamp main body is connected to earth via the ferrule, and it is possible to prevent the risk of electric shock or the like at the time of the maintenance such as the cleaning and the exchange of the fluorescent lamp type light-emitting device lamp 2.

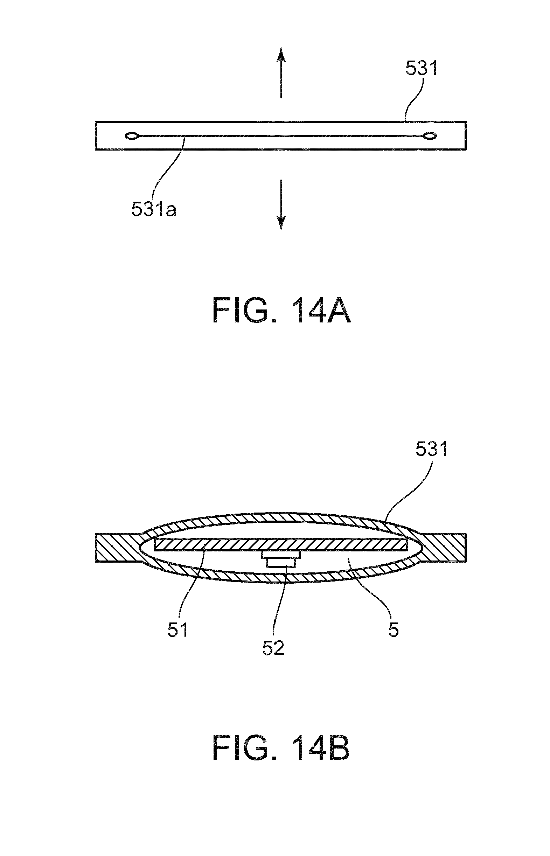

Next, a fourth embodiment of the present invention will be described with reference to Figs. 14A and 14B. In addition, the same or corresponding portions as those of the first embodiment are denoted by the same reference numeral, and the repeated descriptions thereof will be omitted.

### (Example 1)

In the preset example, an insulation member 531 is formed of, for example, a foam resin material having predetermined flexibility. The insulation member 531 is formed in a substantially long rectangular parallelepiped shape, and a notch 531a facing the longitudinal direction, which is a transverse direction, is formed in a side middle portion thereof (see Fig. 14A). Thus, at the boundary of the notch 531a, the substrate 51 with the light-emitting device 52 mounted thereon is inserted and disposed to the space formed to be opened in the vertical direction (shown by an arrow in the drawing), as shown in Fig. 14B.

As a result, the periphery of the substrate 51 is covered and insulated by the insulation member 531. By disposing the light source portion 5 in the inner space of the main body 4, the double insulation is performed and the insulation properties are strengthened. Furthermore, the main body 4 is connected to earth via the ferrule, and thus electrical safety is further provided.

### (Example 2)

In the present example, the substrate 51 with the light-emitting device 52 mounted thereon is, for example, covered by the transparent silicone resin as the insulation member. Although it is not shown, the insulation member can be manufactured by placing the substrate 51 and pouring the silicone resin having predetermined fluidity into a mold and hardening the same.

In this manner, by disposing the light source portion 5 covered by the insulation member 53 in the inner space of the main body 4, the double insulation is performed and the insulation properties can be strengthened. Furthermore, since the main body is connected to earth via the ferrule, and thus electrical safety is further provided.

In the present embodiment mentioned above, the fluorescent lamp type light-emitting device lamp is not limited to a form which is compatible with the straight tube type fluorescent lamp. Furthermore, the lighting device, which controls the lighting of the light-emitting device, may be disposed on the lighting apparatus main body side or may be disposed on the fluorescent lamp type light-emitting device lamp side.

In addition, in the embodiment mentioned above, a case has been described where the supply of the electric power to the fluorescent lamp type light-emitting device lamp is performed via the socket and the ferrule. However, an electric supply portion and the lighting device separately provided in the main body of the fluorescent lamp type light-emitting device lamp are connected to each other via the lead line, and the electric power may be supplied. Furthermore, the connection between the lighting device and the electric supply portion may be the connector connection.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

The present application claims a priority based on the benefit of preceding Japanese Patent Application Nos. 2010-102440 filed on April 27, 2010, and 2010-102441 filed on April 27, 2010, and seeks the profits thereof, the entire contents of which are hereby incorporated by reference.

### EXPLANATION OF NUMERALS AND SYMBOLS

1 lighting apparatus main body
2 fluorescent lamp type light-emitting device lamp
3 socket
4 lamp main body
5 light source portion
6 ferrule
6a, 6b terminal pin
8 earth line
52 light-emitting device (LED)
53, 531 insulation member

## Claims

1. A fluorescent lamp type light-emitting device lamp comprising:
a substantially cylindrical main body having one end portion and the other end portion;
a light-emitting device disposed in the main body; and
a pair of ferrules provided in the one end portion and the other end portion and connected to a socket, respectively,
wherein one ferrule of the pair of ferrules is connected to earth via the ferrule, by being attached to the socket connected to earth.

2. The fluorescent lamp type light-emitting device lamp according to claim 1, further comprising:
an electrically conductive thermal radiation member for radiating heat from the light-emitting device,
wherein the thermal radiation member is connected to earth via the ferrule.

3. The fluorescent lamp type light-emitting device lamp according to claim 1,
wherein the light-emitting device is supplied with the electricity via the ferrule provided in the one end portion, and the earth connection is performed via the ferrule provided in the other end portion.

4. The fluorescent lamp type light-emitting device lamp according to claim 1,
wherein the light-emitting device is supplied with electricity via the ferrules provided in the one end portion and the other end portion, and the earth connection is performed via the ferrule provided in one of the one end portion and the other end portion.

5. The fluorescent lamp type light-emitting device lamp according to claim 1,
wherein the ferrules provided in the one end portion and the other end portion are provided with a pair of terminal pins, respectively, the light-emitting device is supplied with the electricity via the respective terminal pins provided in the one end portion and the other end portion, and the earth connection is performed via one terminal pin other than the terminal pins for electric supply.

6. The fluorescent lamp type light-emitting device lamp according to claim 5,
wherein the terminal pins for electric supply provided in the ferrules of the one end portion and the other end portion are separately placed in a direction perpendicular to a longitudinal direction of the main body on the same plane, and is projected so as to be parallel to the longitudinal direction of the main body.

7. Alighting apparatus comprising:
a lighting apparatus main body which has a socket connected to earth; and
the fluorescent lamp type light-emitting device lamp according to claim 1 which is installed on the socket.

8. The lighting apparatus according to claim 7,
wherein the earth connection is performed simultaneously with the attachment of the socket to the lighting apparatus main body.

9. A fluorescent lamp type light-emitting device lamp comprising:
a substantially cylindrical insulating main body including a light-transmitting portion in at least a portion thereof;
a light source portion disposed in the main body and including a substrate, a light-emitting device mounted on the substrate and emitting light from the light-transmitting portion, and an insulation member covering peripheries of the substrate and the light-emitting device, a portion of the insulation member facing at least the light emitting device having light-transmitting properties; and
a pair of ferrules disposed in one end portion and the other end portion of the main body and installed on a socket of the lighting apparatus,
wherein an earth connection is provided via one of the pair of ferrules.

10. Alighting apparatus comprising:
a lighting apparatus main body including the socket connected to earth; and
the fluorescent lamp type light-emitting device lamp according to claim 9 installed on the socket.

11. The lighting apparatus according to claim 10,
wherein the earth connection is performed simultaneously with the attachment of the socket to the lighting apparatus main body.
